Europäisches Patentamt

European Patent Office

Office européen des brevets

(11) Publication number: **0 357 843**
A1

## (12) EUROPEAN PATENT APPLICATION

(21) Application number: 88201945.8

(22) Date of filing: 09.09.88

(51) Int. Cl.5: **A22C 21/00** , **B65G 47/86**

(43) Date of publication of application:
**14.03.90 Bulletin 90/11**

(84) Designated Contracting States:
**AT BE CH DE ES FR GB GR IT LI LU NL SE**

(71) Applicant: **LINCO HOLLAND ENGINEERING B.V.**
**Broekhuizerweg 6**
**NL-6983 BM Doesburg(NL)**

(72) Inventor: **Tieleman, Rudolf Josephus**
**Dubbeltjesweg 20**
**NL-6997 Hoog Keppel(NL)**
Inventor: **Hullu, Jannis Marinus de**
**Stokebrand 150**
**NL-7206 EJ Zutphen(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Device for transferring slaughtered poultry.**

(57) For transferring slaughtered poultry from the one conveyor to the other conveyor transfer units (34) moving in a closed track are applied, which each consists of a two-armed lever (39) having a gripper (45) at the free end of one of the arms thereof and being movable in a radial plane. The gripper is movable in radial direction and axial direction by means of curve tracks acting upon the lever, namely a steering curve (33) and a lifting curve (32) respectively, as well as in peripheral direction by means of a drive with respect to the curve tracks on a cylindrical curve drum (31).

FIG.1

## Device for transferring slaughtered poultry.

The invention relates to a device for transferring slaughtered poultry from a first conveyor running over one or more chain wheels and having first suspension hooks, to a second conveyor having second suspension hooks and also running over one or more chain wheels, provided with a transfer device comprising a plurality of transfer untis moving in a closed track, which pick up the poultry from said first suspension hooks and hang said poultry in the second suspension hooks.

A similar device is known from EP-A-0.155.014 laid open for public inspection. With this known transfer device the birds are lifted from the suspension hooks of said first conveyor by means of swingable overhanging units and are swung downwardly into the suspension hooks of transfer units of a transfer device, which consists of a chain moving in an oblong closed track, said chain running over two chain wheels and on which the transfer units are mounted side by side. The birds are pushed radially outwardly from the hooks of the transfer units into the suspension hooks of the second conveyor by means of a rail situated near the track of the transfer units. Said known transfer device has a complicated construction and acts laboriously and is therefore expensive, but especially takes a lot of space.

The invention aims at removing the objections of said known transfer device. This purpose is attained, because according to the invention the transfer device comprises a cylindrical transfer drum being rotatable and driveable about its longitudinal axis, along the descriptive lines of which a plurality of transfer untis are movable, and a stationary cylindrical curve drum having a lifting curve and a steering curve and being positioned concentrically with respect to the transfer drum and because each transfer unit is provided with a lever having a gripper and being movable in a radial plane of said drums, a lifting slide which is axially movable along guide rods with a guide roller in the lifting curve and on which said lever is pivotably mounted, and a steering slide which is axially movable along the same guide rods with a guide roller in the steering curve and which is provided with a slot under an acute angle with respect to the guide rods, in which the end of said lever opposite the gripper is slideably mounted.

By applying these measures a constructively relatively simple and safe acting device is attained, which moreover can be disposed in a relatively small substantially cylindrical space, the diameter of which is approximately equal to the diameter of the largest chain wheel. By means of the lifting curve the lifting slide and consequently the gripper can be moved in vertical direction and by means of the steering curve the steering slide can be moved in vertical direction and therewith by means of the slot in the steering slide swing the lever with the gripper in a vertical plane and consequently displace the gripper substantially horizontally. Because of this it becomes possible to transfer the slaughtered birds from the first suspension hooks, which have a certain mutual distance, to the second suspension hooks, which have a different mutual distance, because the grippers can move over an arc on different radial distances of the centre line.

With a preferred embodiment of the device according to the invention the gripper consists of two pivotably mounted plate-shaped clamping jaws lying in one plane, which are resiliently biassed towards each other and which at the edges directed towards each other are provided with a first entering surface, a clamping surface and a second entering surface from top to bottom respectively.

With such a gripper the slaughtered birds can be grabbed safely and still without unnecessary damages and lifted from the first suspension hooks and transferred into the second suspension hooks and released. Therewith when hanging the birds in the second suspension hooks the clamping jaws of the gripper are first pushed away from each other, because the suspension hooks are running onto the entering surfaces so that the gripper opens and the suspension hook can easily grab the neck of the bird.

Furthermore the invention relates to a device for transferring slaughtered poultry from a first conveyor running over one or more chain wheels and having first suspension hooks, to a second conveyor having second suspension hooks also running over one or more chain wheels, provided with a transfer device having a plurality of transfer units moving in a closed track, which pick up the poultry from the first suspension hooks and hang the poultry in the second suspension hooks, which transfer device is known from EP-E-A-0.155.014. With said known device the birds can only be transferred from leg to leg from the one conveyor to the other conveyor.

The device according the invention distinguishes itself with respect to the known device, in that the transfer device comprises a cylindrical transfer drum being rotatable and driveable about its longitudinal axis, along the descriptive lines of which a plurality of ejector- and transfer units are movable, and at least one stationary, cylindrical curve drum which is positioned concentrically with respect to the transfer drum, and has an ejector curve, a steering curve and a lifting curve, in that each ejector unit is provided with a slide guided in said ejector curve and having an ejector and in that each transfer unit is provided with a lifting slide, which is axially movable along guide rods with a guide roller in said lifting curve and on which a lever, which is movable in a radial plane of said drums, is pivotably mounted, and which at the free end of the one arm is provided with a gripper and a steering slide which is axially movable along the same guide rods with a guide roller and which is provided with a pivotable rod, which at its free end is pivotably connected with the free end of the other arm of said lever.

By applying these measures it is possible to push the birds, hanging at their legs in so-called plucking hooks, out of the plucking hook by means of the ejector units and to hang the birds at their heads at so-called eviscerating hooks by means of the transfer units. The object thereof is that the plucking (of the feathers) goes easier and better when the bird is hung at the legs and the eviscerating work can be performed easier, faster and especially more hygienic when the bird hangs at its head.

The invention will be elucidated further with the aid of the drawings with a few embodiments.

Figure 1 is a perspective view of the transfer device according to the invention in a first embodiment,

figure 2 is a side-view of a transfer unit of the device according to figure 1 and shows the lifting of a bird from the first suspension hooks,

figure 3 is a side-view of a transfer unit of the device according to figure 1 and shows the hanging of a bird into a second suspension hook,

figure 4 is a front view, seen from outside to the inside, of the clamping jaws of the gripper of the transfer units of the device according to figure 1,

figure 5 is a back view, seen from the inside to the outside, of the clamping jaws according to figure 4,

figure 6 is a side-view according to the line VI-VI in figure 4,

figure 7 is a side-view of the curve drum of the device according to figure 1 projected in a flat plane, and

figure 8 is a schematically drawn top view of the transport and the transfer of the slaughtered birds from the one conveyor to the other conveyor with the device according to figures 1 to 7,

figure 9 is a perspective view of the transfer device according to the invention with a second embodiment,

figure 10 is a side-view of a second transfer unit of the device according to figure 9 and shows the device in the situation in which the ejector unit is just about to push the bird out of the so-called plucking hook,

figure 11 shows the hanging of the bird to the so-called eviscerating hooks,

the figures 12, 13 and 14 show a front view, side view and top view respectively of the left clamping jaw of the gripper of the transfer units of the device according to figure 9,

the figures 15, 16 and 17 show a front view, side view and top view respectively of the right clamping jaw of the gripper of the transfer units of the device according to figure 9,

the figures 18 and 19 show the curve drum of the device according to figure 9 projected in a flat plane, and

figure 20 is a schematic top view of the principle of the transfer of the transfer device according to the invention with the second embodiment.

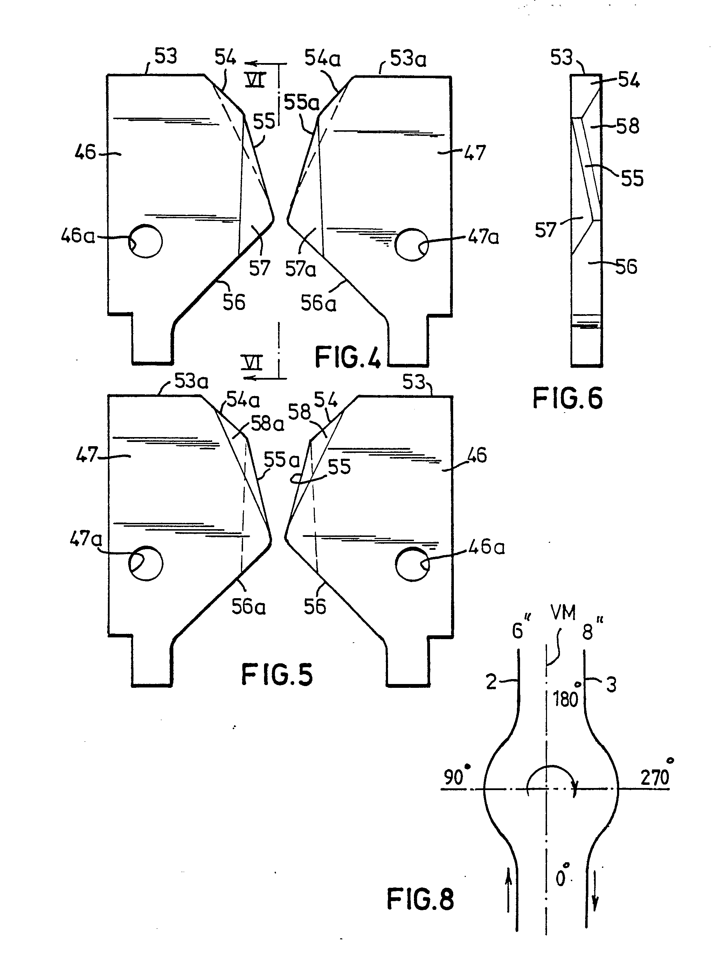

The device 1 according to the invention is positioned between a first conveyor which consists of a rail 2, which in situ of the device 1 is bent in the shape of a part of an arc, and a second conveyor which also consists of a rail 3, which in situ of the device 1 is also bent in the shape of a part of an arc, vide also figure 8.

On the rail 2 trolleys 4 are movable, which are connected with each other by means of a non-drawn chain and the distance between centre lines of which amounts to e.g. 6 inches. At the trolleys 4 pivotable hooks 5 are hanging with a V-shaped suspension member 6, in which the birds are hanged at the neck. On the rail 3 the trolleys 7 are movable, which are also connected with each other by means of a non-drawn chain and the distance between centre lines of which is larger than that of the trolleys 4 and amounts to e.g. 8 inches. The trolleys 4 keep on moving along the rail 2 and the trolleys 7 along the rail 7.

At the trolleys 7 pivotable weighing hooks 8 are hanging which have a special construction and all have the same weight. Each weighing hook 8 has a pivotable, V-shaped suspension member 9 with a contra-weight 10 and a blocking slide 11, which can be slid upwardly, after which the suspension member 9 with the weight 10 rotates in clock-wise direction (arrow 12), the bird falls from the suspension member 9 and the suspension member 9, the counter-weight 10 and the blocking slide 11 automatically return into the drawn starting position.

The transfer device 1 is provided with a frame 13, consisting of longitudinal beams 14 and cross beams 15, only the upper one of which is drawn. In the upper cross beam 15 and the lower cross beam a stationary shaft 16 is positioned, which in situ of the lower cross beam is provided with a toothed rack (not drawn), by means of which the shaft 16 is vertically adjustable with e.g. a handwheel, which through a gearing is coupled with the toothed rack (not drawn).

Under the cross-beam 15 and concentrically with respect to the stationary shaft 16 a hollow shaft is mounted, in which the shaft 16 is axially slideable by means of a set of bearing sleeves (not drawn). On the hollow shaft first a relatively large upper chain wheel 17 with a pitch of 2 inches and underneath a relatively small lower chain wheel 18 with a pitch of 2 inches are mounted rotatably but axially not slideably. The teeth of the lower chain wheel 18 engage the trolleys 4 and the teeth of the upper chain wheel 17 engage the trolleys 7. Further, a centering ring (not drawn) is secured on the hollow shaft, on which centering ring a coupling sleeve 19 is mounted axially slideable between stops which sleeve is provided with eight axial slots 20, which in the drawn position of the sleeve 19 each engage over a spoke 21 of the upper chain wheel 17 and a spoke 22 of the lower chain wheel 18. The sleeve is axially slideable with a pneumatic cylinder (not drawn) or with a manually operated double lever 23, which with free rotatable rollers 24 engages under a flange 25 of the coupling sleeve 19 and is provided with a control lever 26.

Under the lower chain wheel 18 a transfer drum 27 is mounted rotatably and axially non-slideably on the stationary shaft 16, said transfer drum consisting of an upper flange 28, a lower flange 29 and sets of connecting rods 30, which are secured between the upper flange 28 and the lower flange 29. The upper flange 28 is coupled with the lower chain wheel 18 by means of an telescopically adjustable carrier (not drawn), such that the drum 27 can be disconnected from the lower chain wheel 18. Between the upper flange 28 and the lower flange 29 a curve drum 31 is secured solidly on the stationary shaft 16 and concentrically with respect to the transfer drum 27, said curve drum being provided with an upper curve track 32 and a lower curve track 33, the function of which will be further elucidated hereinafter. On each set of connecting rods 30 a transfer unit 34 is mounted vertically slideably, the pitch of the sets of connecting rods 30 being somewhat smaller than that of the trolleys 4 on the conveyor 2, which amounts to 6 inches and the drum is provided with e.g. 16 sets of connecting rods 30 and transfer units 34 respectively.

The construction of the transfer units 34, their cooperation with the curve drum 31 and the transfer of the birds from the hooks 6 with the units 34 to the hooks 9 will be further elucidated hereinafter.

Each transfer unit 34 consists of a pair of slides 35 and 36, which are slideable with sliding sleeves on the sets of connecting rods 30 and which engage with a guide roller 37 and 38 respectively in the upper curve track or lifting curve 32 and the lower curve track or steering curve 33 respectively, and a two-armed, double lever 39 being pivotably in a radial plane, and being mounted on a horizontal pivot shaft 40 in the upper slide 35. The lower arm 41 of the double lever 39 is at its lower end provided with a transverse shaft 42, which is slideable in a slot 43 in the lower slide 36 perpendicularly to the shaft 42, which slot extends upwardly in outward direction at an angle of ± 45 degrees with respect to the connecting rods 30. The upper arm 44 of the double lever 39 is at its free upper end provided with a gripper 45, which consists of two cooperating clamping jaws 46 and 47, which are pivotably mounted in a plane parallel to the plane of the lever 39, on the transverse arms 48 and 49 at the upper lever arm 44 and which by means of a torsion spring 50 and 51 respectively are biassed towards each other on the transverse arms 48 and 49, the lower ends of the jaws 46 and 47 rest against stops 52, which are provided under and spaced from the transverse arms 48 and 49.

In the figures 4,5 and 6 a front view, a back view and a side view respectively of the clamping jaws 46 and 47 are drawn. In front view means in radial direction from the outside to the inside and in back view in radial direction from the inside to the outside. In the normal position out of order the clamping jaws 46 and 47 are provided with a horizontal upper surface 53 and 53a respectively, an upper entering surface 54 and 54a respectively at an angle of ± 40 degrees with respect to the upper surface, a clamping surface 55 and 55a respectively at an angle of ± 70 degrees with respect to the upper surface and a lower entering surface 56 and 56a respectively at an angle of ± 135 degrees with respect to the upper surface. Further, at the front side (the radial outside) of the clamping jaws 46 and 47 a bevelled plane 57 and 57a respectively is made, which extends over the whole length of the clamping surface 55 and 55a respectively and over a part of the length of the lower entering surface 56 and 56a respectively. Also at the backside (the radial inside) of the clamping jaws 46 and 47 a bevelled surface 58 and 58a respectively has been made which extends over a part of the length of both the first entering surface 54 and 54a respectively and the clamping surface 55 and 55a respectively. The bevelled surfaces 57, 57a and 58, 58a are applied such, that the clamping surface 55 and 55a respectively obtains a width, which amounts to ± one third of the thickness of the clamping jaws 46 and 47 and in the direction from top to botomm run from the front side to the back side of the clamping jaws.

The clamping jaws 46 and 47 are pivotably mounted with the bores 46a and 47a respectively on the transverse arms 48 and 49, such that the pivot point of the jaws 46 and 47 lies under the point of engagement of a part of a slaughtered bird V on the lower entering surfaces 56 and 56a, so that the clamping jaws 46 and 47 can easily pivot in counter-clockwise direction, and clockwise direction respectively (vide figure 4). With the thus formed clamping jaws 46 and 47 the bird can be lifted in an appropriate and safe manner from the hook 6 and can be held with the neck between the clamping surfaces 55 and 55a and subsequently can be hung efficiently and safely to the hook 9.

Now the course of the curves 32 and 33 is described and in connection therewith the working of the device according to the invention especially by means of the figures 7 and 8. The curve drum 31 preferably consists of a cylinder of nylon or an other wear-resistant and hygienic plastic, which has a relatively large wall thickness and in which the curves 32 and 33 are milled. The curve 32 is the lifting curve and the curve 33 is the steering curve. The course of the curves 32 and 33 is described from the position of the longitudinal centre line of the transfer unit 34 at an angle of rotation of 0 degrees, which rotational position lies in the vertical centre plane VM, in which lies the centre line of the stationary shaft 16.

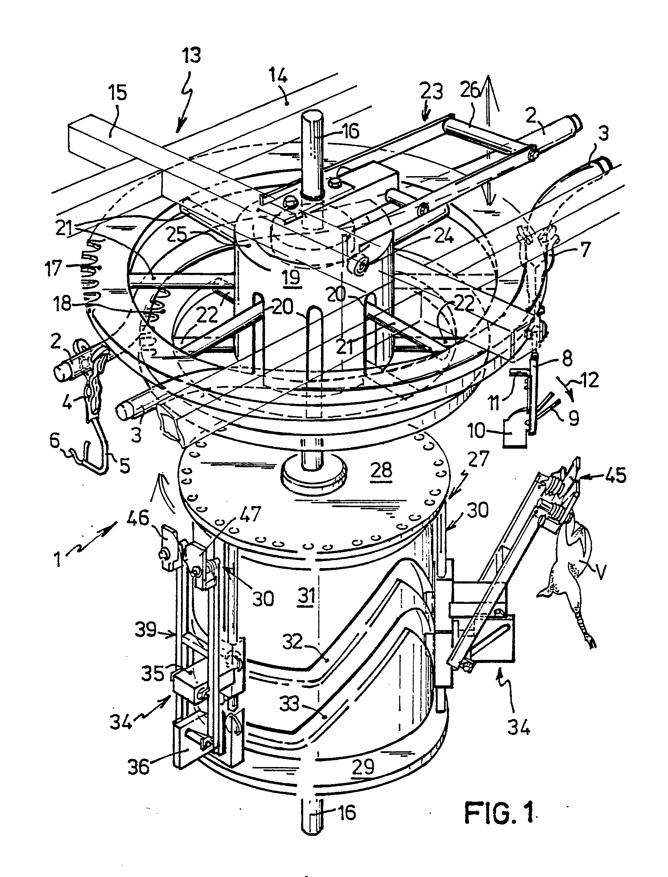

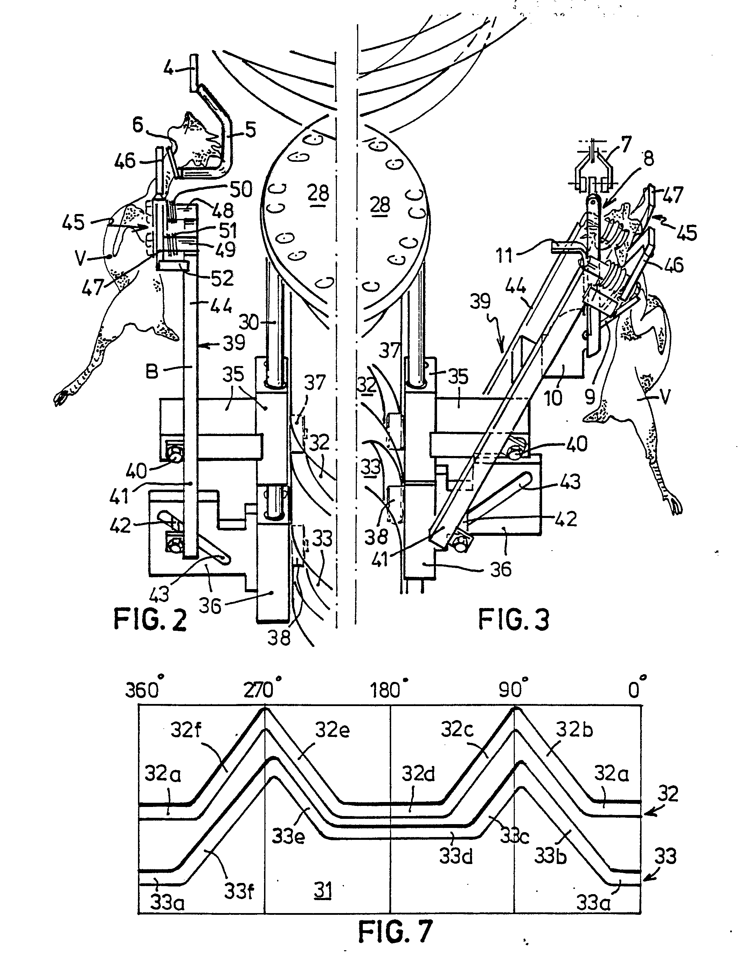

The lifting curve 32 and the steering curve 33 start with a horizontal portion 32a and 33a respectively, which lie on a relatively large distance from each other, so that the lever 39 of the transfer unit 34 stands substantially vertical. Upon motion of the unit 34 from 0 degrees to ± 30 degrees in the direction of the arrow A in figure 1 the lever 39 remains vertical and at the same height. Upon the rotation from ± 30 degrees to ± 35 degrees the lever 39 is lifted by the lifting curve 32 over ± 8 mm from the assumed starting height of 0 mm and is rotated outwardly by the steering curve 33 over ± 5 degrees, that is to say in figure 2 in the direction of the arrow B. The parts 32 and 33a of the curves 32 and 33 pass with a rounded transition into the parts 32b and 33b respectively, which lie between rotational angles of ± 35 degrees and ± 85 degrees. During the rotation of the transfer unit 34 between ± 35 degrees and ± 85 degrees the slide 35 and consequently the lever 39 is lifted with the gripper 45 over 260 mm in the position of the lever 39 rotated outwardly over 5 degrees (arrow F in figure 2).

Upon this motion of the lever 39 the gripper 45 with both clamping jaws 46 and 47 engage onto both sides of the neck of the bird V, vide figure 2, the neck of the bird being clamped between the clamping surfaces 55 and 55a and being lifted from the V-hook 6.

Between an angle of rotation of 85 degrees and an angle of rotation of 95 degrees the transfer unit 34 remains at the same height, but the lever 39 is rotated further outwardly over 10 degrees into the position of 15 degrees in the direction of the arrow B. There the cam rollers 37 and 38 are near the rounded transition between the parts 32b, 33b and 32c, 33c of the lifting curve 32 and the steering curve 33 respectively. Upon the rotation of the transfer unit 34 from ± 95 degrees to ± 150 degrees, said unit descends over a height of 260 mm to the starting height of 0 mm and during the transition of the curve parts 32, 33c to horizontal curve parts 32d and 33d, the lever 39 moves outwardly over an angle of 10 degrees (arrow B in figure 2) to a position of 25 degrees with respect to the vertical starting position at an angle of rotation of 0 degrees. With the rotation of the unit 34 from ± 150 degrees to ± 210 degress said unit 34 remains at the starting height of 0 mm and the lever 39 remains in the outwardly rotated position in the direction of the arrow B over 25 degrees.

Then the curve track parts 32d and 33d pass into the curve track parts 32e and 33e with a rounded transition, the transfer unit 34 being lifted over ± 8 mm while the lever 39 remains in the outwardly rotated position in the direction of the arrow B over 25 degrees. This happens upon rotation of the unit 34 from 210 degrees to 220 degrees. During the rotation of the unit 34 from 220 degrees to 265 degrees said unit is lifted to a height of 260 mm above the starting position of 0 mm and said lever 39 remains in the outwardly rotated position over 25 degrees (arrow B in figure 2). Moreover, both parts of the upper arm 44 of the lever 39 move from the bottom to the top on both sides of the weighing hook 8-11, such that the neck of the bird V is radially outside but approximately at the same height as the V-shaped suspension member 9 of the weighing hook 8-11. At an angle of rotation of the unit 34 of ± 265-275 degrees the curve parts 32e and 33e pass into the curve track parts 32f and 33f with a rounded transition and there the lever 39 moves from the outwardly rotated position over ± 25 degrees over an angle of ± 15 degrees inwardly in the direction opposite to the arrow B, so that the lever 39 still encloses an angle of ± 10 degrees with the vertical starting position at an angle of rotation of the unit 34 of 0 degrees. Then the neck of the bird V is in the V-shaped suspension member 9 of the weighing hook 8-11.

During the rotation of ± 275 degrees to ± 330 degrees of said unit 34 the guide rollers 37 and 38 move through the curve parts 32f and 33f, wherein the unit 34 moves downwardly over a distance of ± 260 mm and the lever arm 39 remains in the already taken angular position of 10 degrees in the direction of the arrow B with respect to the vertical starting position. Upon this downward motion, vide the figures 1 and 3, the gripper 45 is pulled downwardly with the clamping jaws 46 and 47 on both sides of the U-shaped suspension member 9, the legs of the V-shaped suspension hook 9 engaging the lower entering surfaces 56 and 56a and "turning open" the clamping jaws 46 and 47 in the opposite direction and that the neck of the bird V can be moved between the clamping jaws 46 and 46a and simultaneously into the V-shaped suspension hook, after which the legs of the V-shaped hook 9 slide along the surfaces 55-55a and 54-54a, the clamping jaws being closed again and the bird V remains hanging in the V-shaped suspension member 9 of the weighing hook 8-11 and the transfer unit moving further downwardly and the bird V is taken to the weighing device by the weighing hook.

On a rotational position of the unit 34 of ± 330 degrees the curve parts 32f and 33f pass into the curve parts 32a and 33a with a rounded transition, the unit 34 returning again at the starting height of 0 mm and the lever 39 rotating back over an angle of 10 degrees into the vertical starting position in the direction opposite to the arrow B in figure 2. In this position and at this height the unit 34 rotates over the peripheral angle of ± 330 degrees to 360 degrees upon the motion of the guide rollers 37 and 38 in the curve parts 32a and 33a, after which the cycle starts again.

It appears from the above that the device according to the invention can transfer the birds V from the conveyor 2, where the trolleys 4 have a distance between centre lines of 6 inches, in one step to the conveyor 3, where the trolleys 7 have a distance between centre lines of 8 inches, because the gripper 45 is movable both in axial and in radial direction of the transfer drum 27. Although in the above described example the trolleys 4 have a mutual distance of 6 inches and the trolleys 7 a mutual distance of 8 inches, the invention is not restricted to the application with chain conveyors with this pitch.

The above described transfer device according to the invention can simply be put out of order by pulling the grip 26 downwardly or by acutating the pneumatical cylinder not drawn, as a result of which the coupling sleeve 19 moves upwardly and the chain wheels 17 and 18 are disconnected, after which the hooks 4, 5, 6 possibly with the birds V keep on running on the rail 2, whereas the weighing hooks 8-11 are not used.

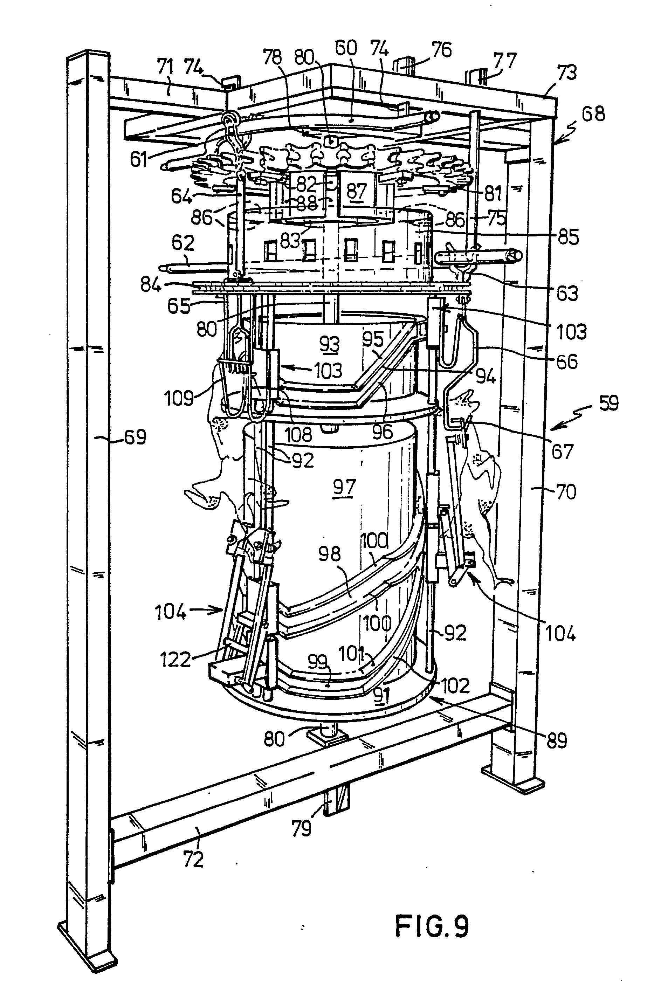

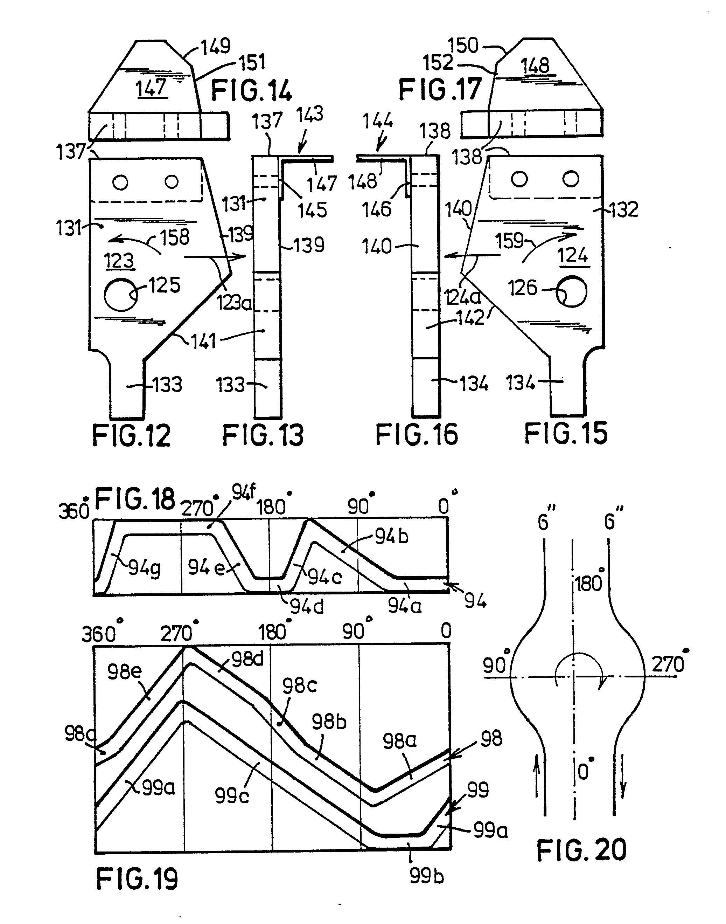

The device 59 according to the invention, which is drawn in the figures 9-20, is positioned between a first conveyor, which consists of a rail 60 with trolleys 61, said rail 60 at the position of the device 59 being bent according to a part of an arc of a circle, and a second conveyor, which consists of a rail 62 with trolleys 63, said rail 62 at the position of the device 59 also being bent according to an arc of a circle, vide also figure 20.

The trolleys 61 on the rail 60 are connected to each other by a non-drawn chain, the mutual distance of the trolleys 61 being 6 inches. On the trolleys 61 hang via a pivotable connecting rod 64 so-called guide hooks or pluck hooks 65, which are called that way, because the birds V hanging with their legs at said hooks have just left the plucking machine (not drawn).

The trolleys 63 on the rail 62 are also connected with each other by means of a non-drawn chain the mutual distance of the trolleys 63 being also 6 inches. On the trolleys 63 hang so-called pivotable eviscerating hooks 66 with a V-shaped suspension member 67. The eviscerating hooks 66 transfer the birds V to the eviscerating device(s) (not drawn), where the gutter and the like are removed from the slaughtered birds. The trolleys 61 keep on moving along the rail 60 and the trolleys 63 along the rail 62.

The transfer device 59 is provided with a frame 68 which consists of vertical stays 69 and 70 which are connected by cross-beams 71 and 72, in the upper cross-bream 71 a frame 73 being welded. The frame 73 is used for supporting the rails 60 and 62, which with two or more strips 74 and 75, which protrude upwards through the beams of the frame 73, are vertically adjustably suspended over a small distance (± 10 mm) at supports 76 and 77 on the frame beams.

At the upper and lower cross-beam 71 and 72 supports 78 and 79 are mounted, in which a stationary vertical shaft 80 is supported. Under the cross-beam 71 a hollow shaft is mounted concentrically with respect to the stationary shaft 80, wherein the shaft 80 is axially slideable by means of a set of supporting sleeves (not drawn). On the hollow shaft under the rail 60 an upper chain wheel 81, which has a pitch of 2 inches, is mounted rotatably but axially fixed by means of spokes 82 and a spacing sleeve (not drawn). Further, below the rail 62 on the hollow shaft a lower chain wheel 84, which also has a pitch of 2 inches, is mounted rotatably but axially fixed on the hollow shaft 80, by means of a cylindrical spacing sleeve 25, spokes 86 and a boss 83. Further, on the hollow shaft a centering ring is secured (not drawn), on which a coupling sleeve 87 is mounted which is axially slidable between stops (not drawn), and which is provided with axial grooves 88, which in the drawn position of the coupling sleeve engage over the spokes 82 of the upper chain wheel 81 and the spoke 86 of the lower chain wheel 84. The coupling sleeve 87 is axially slideable with a pneumatic cylinder or with a manually operated double lever, in the same way as is drawn in figure 1.

Underneath the lower chain wheel 84 a transfer drum 89 is mounted rotatably and axially immovable on the stationary shaft 80, which consists of an upper flange 90, a lower flange 91 and sets of connecting rods 92, which are secured on the upper flange 90 and the lower flange 91 and moreover protrude through the upper flange 90. The sets of connecting rods are secured on a ring (not drawn) at their upper ends, which can rotate freely within the chain wheel 84. On said ring a telescopically slideable eviscerating pen is secured, which is driven by the eviscerating device which is secured on the spokes 86 of the chain wheel 84.

Between the chain wheel 84 and the upper flange 90 a first cylindrical curve drum 93 is secured fixedly on the stationary shaft 80 and concentrically with respect to the drum 89, and which is provided with a curve track 94. The drum 93 and the curve track 94 are manufactured of stainless material, e.g. stainless steel or of nylon, and in the drawn embodiment consist of sheet steel, the curve track 94 being formed by two parallel strips 95 and 96, which are welded square to the periphery of the drum 93. When the drum 93 is manufactured of nylon, it has a large wall thickness and the curve track 84 is milled as a groove in the wall.

Between the upper flange 90 and the lower flange 91 a second cylindrical curve drum 97 is secured, which is provided with two curve tracks, an upper curve track 98 between two parallel strips 100 and a lower curve track 99 between two parallel strips 101 and 102, the embodiment and the function of which will be further elucidated, as well as that of the curve track 94. The drum 97 and the curve tracks 98 and 99 are constructed in the same way as the drum 93 with the curve track 94.

On each set of connecting rods 92 an ejector unit 103 and a transfer unit 104 are mounted vertically slideably, the pitch of the sets of connecting rods 92 being somewhat smaller than that of the trolleys 61 and 63 on the rails 60 and 62 respectively, which is 6 inches and the drums 93 and 97 being provided with e.g. sixteen sets of connecting rods 92 and ejector-and transfer units 103 and 104 respectively.

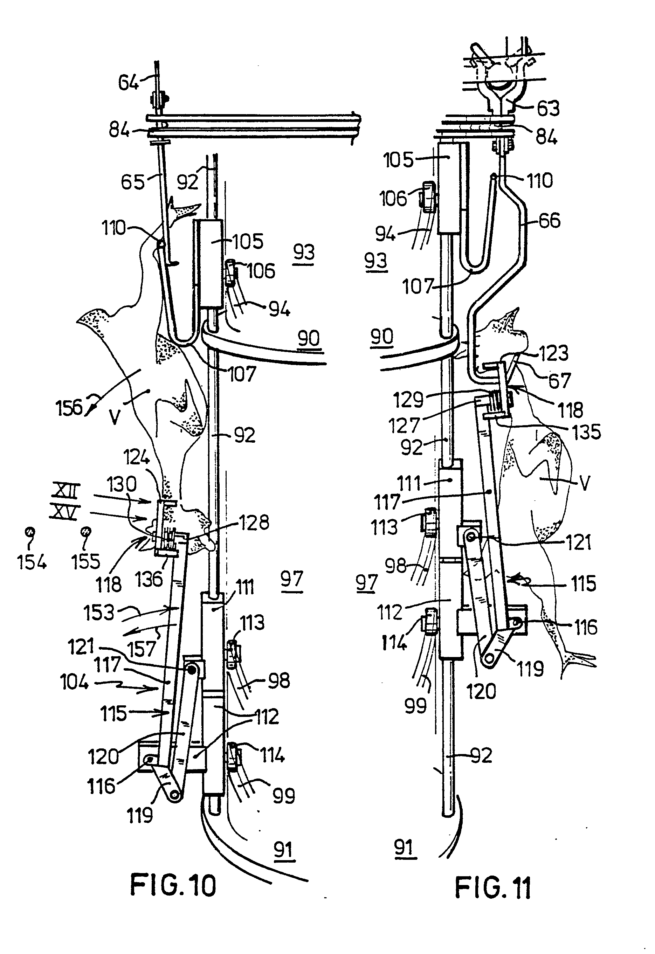

Each ejector unit 103, vide the figures 10 and 11, consists of a slide, which is longitudinally slideable with sliding sleeves on sets of connecting rods 92 and which with a guide roller 106 engages into the first curve track or ejector curve 94. On the slide 105 a clip 107 is secured, which consists of two U-shaped bars 108 and 109, which are connected with the slide 105 at their one end, e.g. welded or soldered and on which a cross bar 110 is secured at their other ends. The cross bar 110 is used to push the legs of the birds V upwardly out of the leg hook 65, as will be elucidated further on.

Each transfer unit 104 consists of two slides 111 and 112, which are slideable in longitudinal direction on the set of connecting rods 92 also with sliding sleeves and which engage with guide rollers 113 and 114 into the upper curve track or steering curve 98 and in the lower curve track or lifting curve 99 respectively, and of a two-armed double lever 115 being pivotable in a radial plane, which is mounted on a horizontal pivot shaft 116 in the lower or lifting slide 112.

The lever 115 has an upper arm 117 on the free end of which a gripper 118 is mounted, and a lower arm 119 which at its free end is connected pivotably with a pivot rod 120, which at its turn is connected with a pivot shaft 121 on the steering slide 111. The parts 117, 119 and 120 of the transfer unit 104 are made double, the parts being at both sides of the slides 111 and 112 and the lever parts being connected with each other by a cross bar 122 and the upper arm 117 being connected fixedly to the lower arm 119.

The gripper 118 consists of two cooperating clamping jaws 123 and 124, vide the figures 12-15, the figures 12 and 15 showing the clamping jaws 123 and 124 in the direction of the arrows XII and XV respectively in figure 10. The clamping jaws 123 and 124 are mounted pivotably to cross arms 127 and 128 respectively with bores 125 and 126 respectively in a plane parallel to the lever 115 at the upper arm 117 of the lever 115 and are biassed with the upper ends 131 and 132 in the direction of the arrows 123a and 124a respectively, toward each other by means of a torsion spring 129 and 130 respectively, the lower ends 133 and 134 of the jaws 123 and 124 resting against stops 135 and 136 on the upper arm of the lever 115.

In the figures 12, 13 and 14 and the figures 15, 16 and 17 respectively a front view, a side view and a top view respectively of the clamping jaws 123 and 124 respectively are drawn. In front view means in radial direction from the outside to the inside.

In the normal position and out of order the clamping jaws 123 and 124 have a horizontal upper surface 137 and 138 respectively, a clamping surface 139 and 140 respectively at an angle of ± 77 degrees with respect to the horizontal and an entering surface 141 and 142 respectively at an angle of ± 135 degrees with respect to the horizontal. Furthermore, the clamping jaws 123 and 124 are provided with an auxiliary jaw 143 and 144 respectively along the upper edge and at the side directed to the machine, which consist of a squarely bent sheet steel knee with a securing flange 145 and 146 respectively and a clamping part 147 and 148 respectively. The clamping parts 147 and 148 have an entering surface 149 and 150 respectively at an angle of ± 45 degrees with respect to the pivot surface of the clamping jaws 123 and 124 and a clamping plane 151 and 152 respectively at an angle of ± 80 degrees with respect to the pivot plane of the clamping jaws. The auxiliary jaws 143 and 144 may be fixed with bolts or are welded or soldered.

Now the course of the curves 94, 98 and 99 is described and in connection therewith the working of the device according to the invention by means of especially the figures 9, 18 and 19. The curve 94 is the ejector curve, the curve 98 is de steering curve and the curve 99 is the lifting curve. The courses of the curves 94, 98 and 99 are described from the position of the longitudinal centre line of the ejector unit 103 and the transfer unit 104 respectively at an an angle of rotation of 0 degrees, which rotational position lies in the vertical centre plane VM, in which lies also the centre line of the stationary shaft 30.

The ejector curve 94 starts with a horizontal part 94 over ± 60 degrees, in which the ejector slide 105 stands still and has its cross bar 110 spaced under the legs of the bird V. Between 0 degrees and ± 75 degrees the steering slide 111 is moved towards the lifting slide 112 over the part 98a of the steering curve 98, wherein the lever 115 with the gripper 118 from a position pivoted outwardly over maximum 80 degrees with respect to the vertical pivots inwardly in the direction of the arrow 153 to the position according to figure 10, wherein the gripper 118 with the auxiliary jaws 143 and 144 engages at both sides of the neck of the bird and holds said bird. Over the same angle of rotation of ± 75 degrees the lifting slide 112 is first moved downwardly by the lifting curve 99 over the parts 99a and 99b and is then kept at said minimum height when rotating between ± 30 degrees and ± 75 degrees.

Over the angle of rotation of ± 60 degrees to the angular position of ± 150 degrees the ejector slide 105 is moved upwardly by the part 94b of the ejector curve, and at an angular position of ± 135 degrees the cross bar 110 pushes the legs of the bird V out of the double plucking hook 65, so that the bird V falls outwardly on temporarily supports 154 and 155 and performs a substantially rotating motion in the direction of the arrow 156 having as a rotation point or pivot point the fixing in the auxiliary jaws 143 and 144. Upon this rotating motion of the bird the neck of the bird V is transferred from the auxiliary jaws 143 and 144 to between the clamping jaws 123 and 124. Over the angle of rotation from ± 75 degrees to ± 150 degrees the slides 111 and 112 move upwardly parallel to each other over the parts 99b and 99c of the steering curve 98 and the lifting curve 99 respectively. There said parts 98b and 99c are approximately parallel to the curve part 94b and the fall of the bird V on the supports 154 and 155 is at least partly broken because the slides 111 and 112 move upwardly during the fall of the bird and thus the neck of the bird V is hung gradually into the clamping jaws 123 and 124.

After the legs of the bird V are pushed out of the pluck hook 65 and both units have attained the angular position of ± 150 degrees, the ejector slide 105 is moved downwardly by the part 94c of the ejector curve 94 until in an angular position of ± 165 degrees. At an angular position of ± 155 degrees the steering slide 111 enters into the part 98c of the steering curve 98, of the distance of which to the lifting curve 99 becomes larger over an angle of rotation of ± 40 degrees until in the angular position of ± 195 degrees and the lever 117 there rotates radially outwardly in the direction of the arrow 157 over an angle of ± 15 degrees. When rotating the units between an angular position of ± 165 degrees and the one of ± 200 degrees the ejector slide 105 moves along a part 94d of the ejector curve 94e and subsequently when rotating the units between an angular position of ± 200 degrees and the one of ± 235 degrees moves upwardly again along a part 94e of the ejector curve 94.

Between an angular position of ± 165 degrees and the one of ± 265 degrees the steering slide 111 moves upwardly along a part 98d of the steering curve 98 where the lever 115 with the gripper 118 and the bird V hanging therein remains in its outwardly rotated position over 15 degrees in the direction of the arrow 157, whereas the lifting slide 112 continues its course along the right part 99c of the lifting curve to an angular position of ± 270 degrees. When moving the steering slide 111 along the curve track parts 98b, 98c and 98d and the lifting slide 112 along the curve track part 99c, the transfer unit 104 is moved upwardly over the maximum stroke of 440 mm of said unit, and at an angular position of ± 225 degrees the transfer unit 104 moves under the eviscerating hook 66, 67 and at an angular position of ± 270 degrees said transfer unit with the gripper 118 and the neck of the bird hanging therein is situated above the V-shaped hanging member 67 of the eviscerating hook 66. There the ejector unit 103 is brought to its highest point in the curve part 94f via the curve part 94e in order to make space for the eviscerating hook 66.

Upon further rotation of the units 103 and 104 the ejector slide 105 moves downwardly on a curve part 94g, which lies between angular positions of ± 330 and ±360 degrees and which in in the angular position of ± 360 degrees and 0 degrees respectively connects with the curve part 94a. The maximum stroke of the ejector slide 105 between the curve parts 94f and 94d amounts to 150 mm. The steering slide 111 moves downwardly over a curve part 98e between the angular positions of ± 265 degrees and ± 345 degrees and parallel thereto the lifting slide 112 moves downwardly over the curve part 99a between the angular positions of ± 270 degrees and ± 30 degrees, during which the lever 115 with the gripper 118 and the bird V with the transfer of the slide 111 from the curve part 98d to the curve part 98e rotates inwardly over an angle of ± 30 degrees in the direction of the arrow 153 into the position according to figure 11.

Upon the downward motion of the steering slide 111 and the lifting slide 112 parallel to each other on the curve parts 98e and 99a at an angular position between ± 280 degrees and ± 285 degrees the clamping jaws 123 and 124 with the lower entering surfaces 141 and 142 move downwardly on both sides of the V-shaped hook 67 of the eviscerating hook 66, the lower horizontal part of the eviscerating hook 66 moving along the entering surfaces 141 and 142 and pushing the jaws 123 and 124 open around the centre lines of the bores 125 and 126 in opposite directions of rotation according to the arrows 158 and 159 and the neck of the bird V comes to hang in the V-hook 67, which clamping jaws 123 and 124 after the passage the V-hook 67 close again in the direction opposite to the arrows 158 and 159.

Between the angular positions of ± 345 degrees and ± 30 degrees the distance between the curve parts 98a and 99a becomes gradually larger, the lever 115 with the gripper 118 pivoting outwardly in the direction of the arrow 157 to an angle of ± 80 degrees with respect to the vertical and thus returning again into the above described starting position. In said position rotated outwardly over ± 80 degrees the lever 115 can move under the bird V, which then is brought there with the double plucking hook 65. At the angular position of ± 30 degrees the lever 115 with the gripper 118 starts to move inwardly again in the direction of the arrow 153 in order to perform its next cyclus of motions.

## Claims

1. Device for transferring slaughtered poultry from a first conveyor running over one or more chain wheels and having first suspension hooks, to a second conveyor having second suspension hooks and also running over one or more chain wheels, provided with a transfer device comprising a plurality of transfer units moving in a closed track, which pick up the poultry from said first suspension hooks and hang said poultry in the second suspension hooks, **characterized in that** said transfer device (1) comprises a cylindrical transfer drum (27) being rotatable and drivable about its longitudinal axis (16), along the descriptive lines (30) of which a plurality of transfer units (34) are movable, and a stationary cylindrical cruve drum (31) having a lifting curve (32) and a steering curve (33) and being concentrically positioned with respect to said transfer drum (27), and that each transfer unit (34) is provided with a lever (39) having a gripper (45) and being movable in a radial plane of said drums (27, 31), a lifting slide (35) which is axially movable along guide rods (30) with a guide roller (37) in said lifting curve (32) and on which said lever (39) is pivotably mounted, and a steering slide (36), which is axially movable with a guide roller (38) along the same guide rods (30) and which is provided with a slot (43) under an acute angle with respect to said guide rods (30), in which the end of said lever (39) opposite said gripper (45) is slideably mounted.

2. Device according to claim 1, **characterized in that** said gripper (45) consists of two pivotably mounted plate-shaped clamping jaws (46, 47) lying in one plane and being resiliently biassed towards each other and which at the edges, directed towards each other, are provided with a first entering surface (54, 54a), a clamping surface (55, 55a) and a second entering surface (56, 56a) from top to bottom respectively.

3. Device according to claim 1 or 2, **characterized in that** in the inactive position of said clamping jaws (46, 47) said first entering surface (54, 54a) encloses an angle of ± 40 degrees, said clamping surface (55, 55a) an angle of ± 70 degrees and said second entering surface (56, 56a), seen in the same direction, an angle of ± 135 degrees with the horizontal.

4. Device according to claim 2 or 3, **characterized in that** said clamping jaws (46, 47) at the radial outside are provided with a bevel surface (57, 57a), which extends over the total length of said clamping surface (55, 55a) and over a part of the length of the bottom entering surface (56, 56a) and that said clamping jaws (46, 47) at the radial inside are provided with a bevel surface (58, 58a) which extends over a part of the length of both said first entering surface (54, 54a) and said clamping surface (55, 55a), in such a way that the width of said clamping surface (55, 55a) amounts to ± one third of the thickness of said clamping jaws (46, 47) and in the direction from top to bottom running from the radial front side to the radial back side of said clamping jaws.

5. Device according to one of the claims 1 to 4, **characterized in that** the centerline of the bores (46a, 47a), with which said clamping jaws (46, 47) are pivotably mounted, lies under the intersecting line of said clamping surface (55, 55a) and said bottom entering surface (56, 56a).

6. Device for transferring poultry from a first conveyor running over one or more chain wheels and having first suspension hooks to a second conveyor with second suspension hooks also running over one or more chain wheels, provided with a transfer device having a plurality of transfer units moving in a closed track, which pick up said poultry from said first suspension hooks and hang them in said second suspension hooks, **characterized in that** said transfer device (59) comprises a cylindrical transfer drum (89) being rotatable and driveable about its longitudinal axis (80), along the descriptive lines (92) of which a plurality of ejector- (103) and transfer units (104) are movable, and at least one stationary, cylindrical curve drum (93, 97) which is positioned concentrically with respect to the transfer drum, and has an ejector curve (94), a steering curve (98) and a lifting curve (99), and that each ejector unit (103) is provided with a slide (105) guided in said ejector curve (94) and having an ejector (107-110) and that each transfer unit is provided with a lifting slide (112), which is axially movable along guide rods (92) with a guide roller (114) in said lifting curve (99) and on which a lever (115), which is movable in a radial plane of said drums (89; 93, 97), is pivotably mounted, and which at the free end of the one arm (117) is provided with a gripper (118; 143, 144), and a steering slide (111) which is axially movable along the same guide rods (92) with a guide roller (113) and which is provided with a pivotable rod (120), which at its free end is pivotably connected with the free end of the other arm (119) of said lever (115).

7. Device according to claim 6, **characterized in that** said gripper (118) consists of two pivotable mounted plate-shaped clamping jaws (124; 124) lying in one plane, which are resiliently biassed towards each other (123a; 124a) and which at their edges directed towards each other from top to bottom respectively are provided with a clamping surface (139; 140) and an entering surface (141; 142) and of an auxiliary jaw (143; 144) at the radial inside along the upper edge of each clamping jaw (123; 124), which is provided with a fastening portion (145; 146) and a clamping portion (147; 148) having an entering surface (149; 150) and a clamping surface (151; 152).

8. Device according to claim 7, **characterized in that** in the inactive position of the clamping jaws (123; 124), the clamping surface (139; 140) encloses an angle of ± 77 degrees and the entering surface (141; 142) an angle of ± 135 degrees with the horizontal and that the entering surface (149; 150) of the auxiliary jaws (143; 144) encloses an angle of ± 45 degrees and the clamping surface (151; 152) an angle of ± 80 degrees with the flat surface of the clamping jaws (123; 124).

9. Device according to claim 7 or 8, **characterized in that** the centre line of the bores (125; 126) with which the clamping jaws (123; 124) are pivotably mounted, lies under the intersecting line of said clamping surface (139; 140) and said entering surface (141; 142).

FIG. 1

**FIG. 2**

**FIG. 3**

**FIG. 7**

FIG.4

FIG.5

FIG.6

FIG.8

FIG.9

FIG.10

FIG.11

FIG.14

FIG.17

FIG.12

FIG.13

FIG.16

FIG.15

FIG.18

FIG.19

FIG. 20

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 675 943 (TABATA)<br>* column 1, line 44 – column 2, line 20; figures 1-3 *<br>--- | 1,6 | A 22 C 21/00<br>B 65 G 47/86 |
| D,A | EP-A-0 155 014 (STORK PMT)<br>* claim 1 *<br>--- | 1,6 | |
| A | US-A-4 660 256 (INNES et al.)<br>* figures 1-5 *<br>--- | 1,6 | |
| A | GB-A-2 095 535 (MEYN)<br>* page 2, lines 41-65; figure 1 *<br>----- | 1,6 | |
| | | | TECHNICAL FIELDS SEARCHED (Int. Cl.4)<br><br>A 22 C 21/00<br>B 65 G 47/00 |

The present search report has been drawn up for all claims

| Place of search | Date of completion of the search | Examiner |
|---|---|---|
| BERLIN | 26-04-1989 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P0401)